# EUROPEAN PATENT SPECIFICATION

(11) **EP 1 607 962 B1**
(45) Date of publication and mention of the grant of the patent: **02.07.2008**
(21) Application number: 05104366.9
(22) Date of filing: 23.05.2005
(51) Int. Cl.: G11B 33/12, G11B 15/00, G11B 19/00, G11B 19/02, G11B 15/675

(54) **A tape cassette deck**
Kassettenbandlaufwerk
Appareil à bande de cassette

(30) Priority: 18.06.2004 KR 2004045305
(43) Date of publication of application: 21.12.2005
(73) Proprietor: SAMSUNG ELECTRONICS CO., LTD., Suwon-si, Gyeonggi-Do 442-742 (KR)
(72) Inventor: Seo, Jae-kal, Yeongtong-gu Suwon-si Gyeonggi-do (KR); Baik, Chung-hum, Yeongtong-gu Suwon-si Gyeonggi-do (KR); Kim, Myoung-joon, Suwon-si Gyeonggi-do (KR); Kim, Bong-joo, Yeongton-gu Suwon-si Gyeonggi-do (KR); Kim, Jun-young, Yeongton-gu Suwon-si Gyeonggi-do (KR); Cho, Young-ho, Yeongtong-gu Suwon-si Gyeonggi-do (KR)
(74) Representative: Geary, Stuart Lloyd

(56) References cited:
- US-A- 4 809 115
- US-A- 5 057 961

## Description

The present invention relates to a tape cassette deck, comprising a chassis and a plurality of sensing means for detecting the operational state of the deck.

Examples of magnetic recording/reproducing apparatus, having a tape cassette deck and using magnetic tape as a recording medium, include Video Cassette Recorders (VCRs) and Digital Versatile Camcorders (DVCs). The main components include a deck, which records or reproduces desired information while running a tape from a cassette, an image-capturing unit, and a signal processing unit.

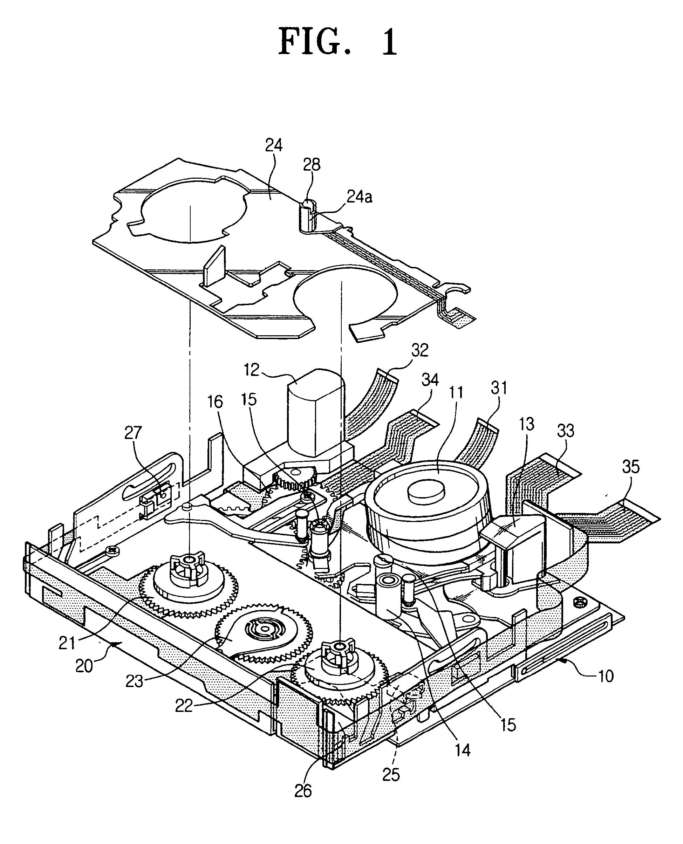

Figure 1 shows a tape cassette deck according to the prior art.

Referring to Figure 1, the deck comprises a main chassis 10 and a sub-chassis 20. The sub-chassis is slidably mounted on the main chassis 10. A cassette housing (not shown), in which a cassette can be placed, is mounted on the sub-chassis 20, so as to move up and down with respect to the sub-chassis 20.

In the main chassis 10, there is provided a head drum 11, a loading motor 12, a capstan motor 13, and a tape running system comprising a plurality of guide rollers 14 and guide poles 15.

In the sub-chassis 20, there is provided a pair of reel tables 21 and 22, for driving a reel of the cassette tape, an idle gear assembly 23 for selectively supplying power to one of the reel tables 21 and 22, and a reel cover 24 for supporting the idle gear assembly 23.

A plurality of switches and sensors are provided in the deck. A mode switch 16 for controlling an operational mode of the deck, and a humidity sensor (not shown) are provided in the main chassis. A cassette switch 25 for detecting the insertion and withdrawal of the cassette, an MIC switch 26 for recognizing the type of cassette are provided in the sub-chassis 20. In addition, a reel sensor (not shown) for checking the number of revolutions of the reel tables 21, 22 and for checking an operational state of the reel tables 21, 22 is provided in the sub-chassis 20. A start/end sensor 27 for recognizing a start point and an end point of the tape is also provided in the sub-chassis 20. A light-emitting device 28 for radiating light to the start/end sensor 27 is supported by a holder 24a provided on the reel cover 24.

The deck is provided with a plurality of Flexible Printed Circuit Boards (FPCBs) 31 to 35, which connect each component to a main circuit board (not shown). The main circuit board controls the operation of each component. The FPCBs are formed of a flexible plastic sheet onto which a circuit is printed. FPCBs are typically more expensive than conventional rigid Printed Circuit Boards (PCBs).

A head drum FPCB 31 connects the head drum 11 to the main circuit board. A loading FPCB 32 connects the loading motor 12 to the main circuit board. A capstan FPCB 33 connects the capstan motor 13 to the main circuit board. Also, a mode FPCB 34 connects the humidity sensor to the mode switch 16 disposed in the main chassis 10 and to the main circuit board. Finally, a sub FPCB 35 connects the cassette switch 25, the MIC switch 26, the reel sensor, the start/end sensor 27, and the light-emitting device 28 to the main circuit board.

The mode FPCB 34 and the sub FPCB 35 are widely placed in the main chassis 10 and the sub chassis 20 respectively, since they are connected to a plurality of components. The large quantity of FPCB required in the deck increases the manufacturing costs considerably.

Additionally, since the deck is divided into the main chassis 10 and the sub-chassis 20, it is difficult to reduce the size of the deck. Since the deck uses high-priced FPCBs to reduce its size, rather than regular PCBs, the manufacturing costs are increased further.

Furthermore, the mode FPCB 34, the sub FPCB 35 and connecting portions are required to connect together the switches and sensors that are provided separately on the deck. This requires the number of the connections with the main circuit board to be high. If the number of connecting portions is increased, thus decreasing the number of connections with the main circuit board, the complexity of the assembling process is increased, and the degree of design freedom in the main circuit is restricted.

US 4809115 decscribes a magnetic recording and reproducing apparatus.

Accordingly, the present invention is directed to a deck for a magnetic recording/reproducing apparatus that substantially ameliorates one or more of the above problems, which are due to limitations and disadvantages of the related art.

According to the present invention, there is provided a cassette according to claim 1 appended hereto.

Providing the sensing means in a single circuit board can reduce the number of connecting portions needed for connecting the components with the main circuit board of the magnetic recording/reproducing apparatus.

Preferably, the chassis is a one-piece chassis. As described above, tape decks conventionally have a main chassis and a sub chassis which moved back and forth over the main chassis, carrying a tape cassette. The one-piece chassis does not have distinct, relatively moveable main and sub chassis.

Preferably, the printed circuit board is mounted on the underside of the chassis (i.e. the printed circuit board is mounted on the side of the chassis opposite to the side on which the cassette is to be placed). The printed circuit board can thus be formed of either a low-priced conventional rigid PCB or a high-priced FPCB. However, in order to reduce the cost of the deck, it is preferred that the circuit board is formed of the conventional PCB. Using a low-priced typical PCB can significantly reduce the manufacturing cost of the device.

Additional optional and preferred features are described in claims 4 to 13.

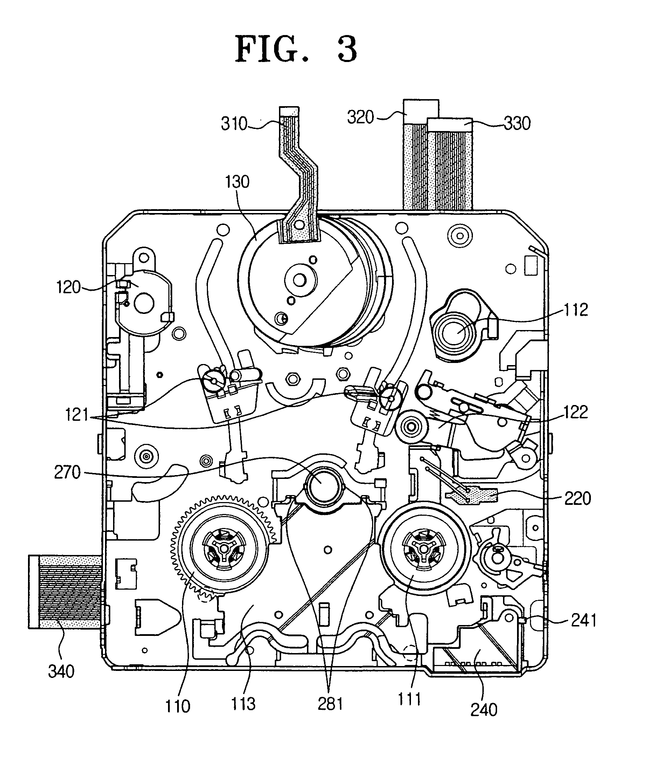

An embodiment of the present invention will now be described, by way of example only, with reference to Figures 2 to 5B of the accompanying drawings, in which:
Figure 1 shows a perspective view of a known tape cassette deck;
Figure 2 shows an exploded perspective view of a tape cassette deck, according to the invention;
Figure 3 shows a plan view of the Figure 2 deck in an assembled status;
Figure 4 shows an underside view of the Figure 2 deck; and
Figures 5A and 5B show cross-sectional views of the Figure 2 deck.

In the Figures, reference numerals are re-used for like elements throughout.

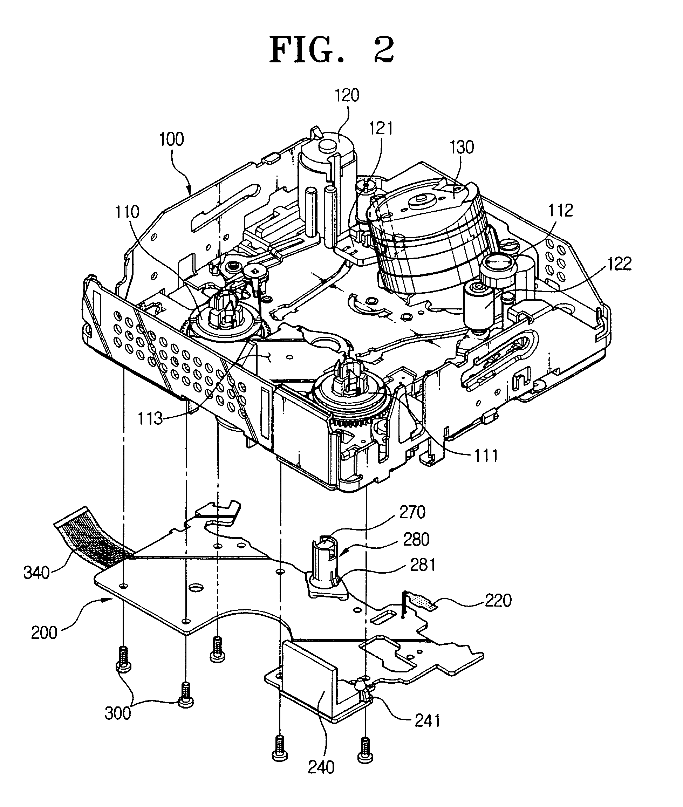

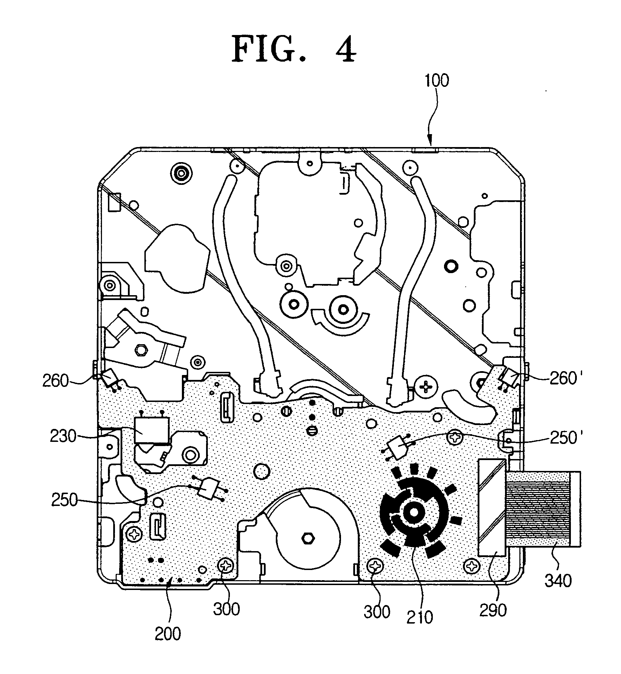

Referring firstly to Figures 2 and 4, an embodiment of a deck for a magnetic recording/reproducing apparatus is shown according to the present invention. The deck comprises a chassis 100 and a switch/sensor circuit board 200.

A loading mechanism for loading a tape is provided on the chassis 100. A plurality of sensing means for detecting an operational state of the deck and the cassette are provided on the switch/sensor circuit board. The deck further comprises a cassette housing (not shown) in which a cassette can be placed.

The loading mechanism comprises a reel assembly having reel tables 110, 111 for driving a reel of the cassette tape, a tape running guide mechanism, having a loading motor 120 and two guide members 121,122. The guide members 121, 122 extract the tape from the cassette. When the tape is extracted, they run the tape along a desired path. The loading mechanism is also provided with a head drum assembly 130 having a magnetic head for recording or reproducing the information on the tape.

The reel assembly is provided with a capstan motor 112 as a driving source. The reel assembly is provided with an idle gear (not shown). The idle gear selectively transmits power from the capstan motor 112 to one of the reel tables 110, 111. The reel assembly is also provided with and a reel cover 113. The reel cover 113 supports the idle gear.

The guide members 121, 122 comprise a pole base assembly and a pinch arm assembly.

The sensing means comprise a plurality of switches and sensors. A mode switch 210 is provided for controlling an operational mode of the deck. A humidity sensor 220 is provided. A cassette switch 230 is provided for detecting an insertion and withdrawal of the cassette tape. An MIC switch 240 is provided for recognizing a type of cassette . Reel sensors 250, 250' are provided for checking the number of revolutions and the operational state of the reel tables 110, 111 respectively. Start/end sensors 260, 260' are provided for recognizing a start point and an end point of the tape. A light-emitting device 270 is provided for radiating light to the start/end sensor 260, 260'.

A holder 280 fixed to the switch/sensor circuit board 200 supports the light-emitting device 270. The MIC switch 240 is also fixed to the switch/sensor circuit board 200.

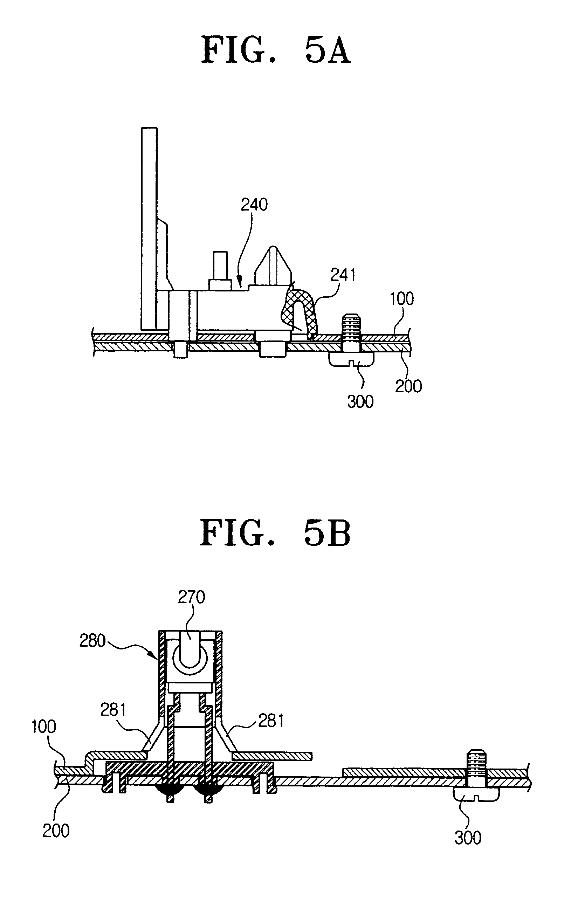

The holder 280 and the MIC switch 240 are each provided with snap-fit attachments 281 and 241, respectively. As shown in Figures 5A and 5B, when the switch/sensor circuit board 200 is fixed to the underside of the chassis 100, the snap-fit attachments 281, 241 are incident on the upper surface of the chassis 100, thereby providing additional support to the assembled state of the switch/sensor circuit board 200 and the chassis 100. Alternatively, screws 300 or any other suitable fixing means may be used by themselves or in combination with snap-fit attachments 281 241 to fix the switch/sensor circuit board 200 to the chassis 100.

In addition, the switch/sensor circuit board 200 is provided with a connector 290. The connector 290 feeds signals from outputs of the switches and the sensors to external components.

The switch/sensor circuit board 200 of the deck can be formed of either a conventional rigid PCB or a FPCB. However, it is preferable that the deck is formed of the lower priced conventional rigid PCB, to reduce the cost of the deck.

FPCBs 310, 320, 330, and 340 are provided to connect the components on the deck to a main circuit board (not shown). A head drum FPCB 310 connects the head drum assembly 130 to the main circuit board. A motor FPCB 320 connects the loading motor 120 to the main circuit board. A capstan FPCB 330 connects the capstan motor 112 to the main circuit board. A first end of a sensor FPCB 340 is connected to the connector 290 of the switch/sensor circuit board 200. A second end of the sensor FPCB 340 is connected to the main circuit board. The sensor FPCB 340 is thus operable to feed signals from the outputs of the switches and sensors on the switch/sensor circuit board 200 to the main circuit board.

In the above embodiment of the deck for a magnetic recording/reproducing apparatus, the loading mechanism is provided in the single chassis 100. The plurality of switches and sensors for detecting an operational state of the deck is provided on the single PCB of the switch/sensor circuit board 200. The PCB is assembled to a lower surface of the chassis 100.

That is, according to the present invention, since only one chassis 100 and only one switch/sensor circuit board 200 are required, the height of the deck can be reduced, and therefore, the size of the deck can be minimized.

Further, since the lower priced conventional rigid PCB is used, the number of connecting portions can be reduced, thereby significantly reducing the manufacturing cost.

Furthermore, since the number of connecting portions is reduced, the degree of design freedom of the main circuit board can be increased.

## Claims

1. A tape cassette deck, comprising:
a chassis (100); and
a plurality of sensing means (210, 230, 250, 260) for detecting the operational state of the deck, said plurality of sensing means including a light emitting device (270) and an MIC switch (240) for recognizing a type of cassette tape, wherein the
sensing means are mounted on a single printed circuit board (200):
**Characterised in that**
the printed circuit board is provided with a holder (280) for supporting the light-emitting device, and the printed circuit board is fixed to the chassis using hooks (281, 241) respectively formed at the holder and the MIC switch.

2. A deck according to claim 1, wherein the chassis (100) is a one-piece chassis.

3. A deck according to claim 1 or 2, wherein the printed circuit board (200) is mounted on the underside of the chassis (100).

4. A deck according to claim 1, further comprising:
a plurality of structures constituting the mechanical mechanism comprise a reel assembly having a reel table for driving a reel of a cassette tape, a tape running guide assembly having a loading motor and a plurality of guide members for withdrawing the tape out of the cassette tape and then running the tape along a desired path, and a head drum assembly having a magnetic head for recording information or reproducing recorded information on the tape running along the desired path.

5. The deck as claimed in claim 4, wherein the plurality of sensing means comprises a mode switch for controlling a mode, a humidity sensor, a cassette switch for detecting an insertion and withdrawal of the cassette tape, a reel sensor for checking the number of revolutions and an operational state of the reel table, a start/end sensor for recognizing a start point and an end point of the tape, and wherein the light-emitting device is arranged for radiating light to the start/end sensor.

6. The deck as claimed in claim 1, wherein the printed circuit board is provided with a holder for supporting the light-emitting device, and the switch/sensor circuit board is assembled to the chassis using hooks respectively formed at the holder and the MIC switch and then fixed by a screw.

7. The deck as claimed in claim 1, wherein the printed circuit board is provided with a connector for outputting signals of the switches and the sensors.

8. The deck as claimed in claim 1, wherein there are provided only one chassis and only one switch/sensor.

## Patentansprüche

1. Bandkassettenlaufwerk, das umfasst:
ein Chassis (100); und
mehrere Sensormittel (210, 230, 250,260) zum Nachweis des Betriebszustandes des Laufwerkes, wobei die Vielzahl der Sensormittel eine Licht emittierende Vorrichtung (270) und einen MIC Schalter (240) zum Erkennen eines Typs von einer Bandkassette enthält, wobei die Sensormittel auf einer einzelnen Leiterplatte (200) befestigt sind:
**dadurch gekennzeichnet, dass**
die Leiterplatte mit einer Halterung (280) zum Tragen der Licht emittierenden Vorrichtung versehen ist, und dass die Leiterplatte an dem Chassis unter Verwendung von Haken (281,241) befestigt ist, die jeweils an der Halterung und an dem MIC Schalter ausgebildet sind.

2. Laufwerk nach Anspruch 1, wobei das Chassis (100) ein einteiliges Chassis ist.

3. Laufwerk nach Anspruch 1 oder 2, wobei die Leiterplatte (200) auf der Unterseite des Chassis (100) befestigt ist.

4. Laufwerk nach Anspruch 1, das ferner umfasst:
mehrere Strukturen, die den mechanischen Mechanismus ausmachen und die einen Spulenzusammenbau mit einem Spulendrehteller zum Antreiben einer Bandspule eines Kassettenbandes umfassen, einen Aufbau zur Führung des Bandlaufes mit einem Motor zum Laden und mit mehreren Führungselementen zum Herausziehen des Bandes aus der Bandkassette und dann zur Laufführung des Bandes entlang einem gewünschten Weg, und eine Kopftrommelanordnung mit einem magnetischen Kopf zum Aufzeichnen von Information oder zur Wiedergabe aufgezeichneter Information auf dem Band, das den gewünschten Weg entlang läuft.

5. Laufwerk nach Anspruch 4, wobei die Vielzahl von Sensormitteln umfasst ein Schalter der Betriebsart zur Steuerung einer Betriebsart, einen Feuchtigkeitssensor, einen Kassettenschalter zum Nachweis eines Einsatzes und einer Entnahme des Kassettenbandes, einen Spulensensor zum Prüfen der Anzahl der Umdrehungen und eines Betriebszustandes des Spulendrehtellers, einen Start/Ende-Sensor zum Erkennen eines Startpunktes und eines Endpunktes des Bandes, und wobei die Licht emittierende Vorrichtung so angeordnet ist, dass sie Licht zu dem Start/Ende-Sensor ausstrahlt.

6. Laufwerk nach Anspruch 1, wobei die Leiterplatte mit einer Halterung zum Tragen der Licht emittierenden Vorrichtung versehen ist, und die Schalter/Sensor-Schaltplatte wird mit dem Chassis unter Verwendung von Haken, die jeweils an der Halterung und an dem MIC Schalter ausgebildet sind, zusammengebaut und dann durch eine Schraube befestigt.

7. Laufwerk nach Anspruch 1, wobei die Leiterplatte mit einem Verbindungsstück versehen ist zur Ausgabe der Signale der Schalter und der Sensoren.

8. Laufwerk nach Anspruch 1, wobei nur ein Chassis und nur ein Schalter/Sensor bereitgestellt sind.

## Revendications

1. Platine de cassette à bande, comprenant :
un châssis (100) ; et
une pluralité de moyens capteurs (210, 230, 250, 260) pour détecter l'état opérationnel de la platine, ladite pluralité de moyens capteurs comprenant un dispositif émetteur de lumière (270) et un commutateur MIC (240) pour reconnaître un type de bande de cassette, dans laquelle les moyens capteurs sont montés sur une seule carte à circuit imprimé (200) :
**caractérisée en ce que**
la carte à circuit imprimé est pourvue d'un support (280) pour supporter le dispositif émetteur de lumière, et la carte à circuit imprimé est fixée au châssis en utilisant des crochets (281, 241) formés respectivement au niveau du support et du commutateur MIC.

2. Platine selon la revendication 1, dans laquelle le châssis (100) est un châssis monobloc.

3. Platine selon la revendication 1 ou 2, dans laquelle la carte à circuit imprimé (200) est montée sur la surface inférieure du châssis (100).

4. Platine selon la revendication 1, comprenant en outre :
une pluralité de structures constituant le mécanisme mécanique qui comprend un assemblage de bobine ayant un plateau porte-bobine pour entraîner une bobine d'une bande de cassette, un assemblage de guidage d'avancement de bande ayant un moteur de chargement et une pluralité d'éléments de guidage pour retirer la bande de la bande de cassette et entraîner ensuite la bande le long d'un trajet souhaité, et un assemblage de tambour de têtes ayant une tête magnétique pour enregistrer des informations ou reproduire des informations enregistrées sur la bande avançant le long du trajet souhaité.

5. Platine selon la revendication 4, dans laquelle la pluralité de moyens capteurs comprend un sélecteur de mode pour commander un mode, un capteur d'humidité, un commutateur de cassette pour détecter une insertion et un retrait de la bande de cassette, un capteur de bobine pour vérifier le nombre de révolutions et un état opérationnel du plateau porte-bobine, un capteur de début/fin pour reconnaître un point de départ et un point final de la bande, et dans laquelle le dispositif émetteur de lumière est agencé pour rayonner de la lumière vers le capteur de début/fin.

6. Platine selon la revendication 1, dans laquelle la carte à circuit imprimé est pourvue d'un support pour supporter le dispositif émetteur de lumière, et la carte de circuit de commutateur/capteur est assemblée au châssis en utilisant des crochets formés respectivement au niveau du support et du commutateur MIC et ensuite fixés par une vis.

7. Platine selon la revendication 1, dans laquelle la carte à circuit imprimé est pourvue d'un connecteur pour sortir des signaux des commutateurs et des capteurs.

8. Platine selon la revendication 1, dans laquelle ne sont prévus qu'un seul châssis et qu'un seul commutateur/capteur.
